# DEMANDE DE BREVET EUROPEEN

(11) **EP 3 393 131 A1**
(43) Date de publication de la demande: **24.10.2018**
(21) Numéro de dépôt: 18164900.5
(22) Date de dépôt: 29.03.2018
(51) Int. Cl.: H04N 21/41, H04N 21/422, H04N 21/441, H04N 21/442, H04N 21/61, H04N 21/436

(54) **PROCÉDÉ DE COMMANDE D'UNE PASSERELLE MULTIMÉDIA ET ÉQUIPEMENT POUR LA MISE EN OEUVRE DU PROCÉDÉ**

(30) Priorité: 19.04.2017 FR 1753388
(71) Demandeur: Orange, 75015 Paris (FR)
(72) Inventeur: BRUYERE, Guillaume, 75011 PARIS (FR); LEDUBY, Jean-Bernard, 22430 ERQUY (FR); CONAN, Martin, 35510 CESSON-SEVIGNE (FR)
(74) Mandataire: Vidon Brevets & Stratégie

(57) **Abrégé**

Un procédé de commande de restitution d'un contenu multimédia dans un ensemble de contenus est proposé dans une passerelle multimédia. Le procédé comprend : recevoir des données décrivant des contenus de l'ensemble de contenus, recevoir des premières données d'authentification d'un utilisateur de l'équipement utilisateur, recevoir, depuis un équipement de télécommande de la passerelle multimédia, des données relatives à une commande de changement de contenu, déterminer, sur la base des données décrivant les contenus de l'ensemble de contenus et des données relatives à la commande de changement de contenu, des données d'identification et des données d'obtention d'un contenu correspondant à la commande de changement de contenu et générer une requête de transmission d'un flux de données transportant le contenu correspondant à la commande de changement de contenu, la requête de transmission comprenant les données d'obtention et des deuxièmes données d'authentification correspondant aux premières données d'authentification.

## Description

La présente invention se rapporte à un procédé de commande d'une passerelle multimédia, en particulier pour la restitution d'un contenu multimédia, et à un dispositif pour la mise en oeuvre de ce procédé.

Le développement du réseau Internet, notamment par le nombre croissant de foyers disposant d'un accès haut-débit au réseau, ainsi que celui des équipements utilisateurs (tablettes, smartphones, laptops, téléviseurs connectés, etc.) ont permis l'émergence de nouveaux modes de distribution de contenus multimédia. Par contenu multimédia, on entend tout type de contenu multimédia numérique, tels que des contenus vidéo ou audio-visuels, comme par exemple des vidéos ou des films.

La distribution de contenus multimédia vers un équipement utilisateur connecté au réseau Internet s'effectue généralement en mode de streaming, c'est-à-dire par téléchargement continu en provenance d'un serveur, par exemple un serveur de contenus accessible via le réseau Internet. Pour recevoir un contenu, l'équipement utilisateur, ou un équipement se trouvant sur la chaîne de distribution du contenu (par exemple un décodeur de télévision, ou, en anglais, « *Set Top Box »* (STB)), émet typiquement une requête à destination du serveur, en indiquant une information d'identification (comme par exemple une adresse) du contenu souhaité, et il reçoit en réponse un flux de données numériques correspondant au contenu(s) demandé(s).

Sur réception d'un flux de données transportant un contenu multimédia, l'équipement récepteur du flux effectue un traitement des données reçues (analyse de séquence vidéo, décompression, décodage, etc.), puis le contenu multimédia est restitué à l'utilisateur par une lecture des trames vidéo du flux et de la bande-son associée, avec affichage sur un écran d'un dispositif de restitution (par exemple un téléviseur), qui peut être intégré ou non à l'équipement utilisateur.

Par restitution d'un flux multimédia de type audiovisuel sur un dispositif de restitution, on entend ici l'affichage d'au moins une partie vidéo du flux sur un écran du dispositif de restitution et la restitution d'au moins une partie audio du flux multimédia sur un ou des haut-parleurs du dispositif de restitution. A titre d'alternative, lorsque le flux multimédia est de type audio, par exemple un flux diffusé par une station de radio, et la restitution du flux comprend uniquement la restitution du flux sur un ou des haut-parleurs du dispositif de restitution.

Lorsque le dispositif de restitution est un téléviseur, la restitution de contenus diffusés s'effectue par le biais d'un module de réception adapté au type de réseau de diffusion délivrant les contenus (réseau hertzien, câble ou satellite), par exemple selon la norme DVB (pour Digital Video Broadcast) couplé au téléviseur ou intégré à ce dernier.

Lorsque le dispositif de restitution (typiquement un écran pour ordinateur personnel ou un téléviseur) n'est pas configuré pour la réception de contenus en mode streaming, par exemple parce qu'il ne peut pas être connecté au réseau Internet, ou qu'il n'est pas configuré pour requérir un contenu multimédia depuis un serveur de contenus ou pour restituer un contenu reçu, il est possible d'accéder en mode téléchargement continu de contenus (en anglais, « *streaming* ») à des contenus, par exemple disponibles sur des serveurs hébergés sur le réseau Internet, en connectant au dispositif de restitution un dispositif passerelle multimédia (aussi dénommé dispositif de réception en mode streaming, dispositif de streaming, clé TV ou « *streaming device* » en anglais), qui peut être de type déporté et prendre la forme d'un dispositif portatif (comme par exemple une clé TV ou un dispositif de dimensions restreintes).

Le dispositif passerelle multimédia est en général connecté sur un port HDMI (de l'anglais « *High Definition Multimedia Interface* ») du téléviseur, et configuré pour commander la restitution sur le téléviseur de contenus multimédia reçus depuis des serveurs de contenus avec lesquels il est connecté, tel que des serveurs distants hébergés sur le réseau Internet ou des équipements utilisateurs (smartphone, tablette).

Il est en outre usuellement possible de contrôler un dispositif passerelle multimédia de type déporté à partir d'une application dédiée à son contrôle, encore appelée application compagnon, exécutable sur un équipement utilisateur de type smartphone ou tablette. Cette caractéristique spécifique des dispositifs passerelle multimédia contrôlables à partir d'une application compagnon exécutée sur un équipement utilisateur les distinguent des décodeurs de télévision (STB), qui sont des passerelles multimédia qui dépendent d'une télécommande native et du dispositif de restitution (typiquement un téléviseur) auquel ils sont connectés pour leur interface utilisateur (l'interface graphique de pilotage d'un décodeur de télévision étant affichée sur l'écran du téléviseur).

A l'inverse, les passerelles multimédia de type déporté prévues pour être connectées à un téléviseur dépendent de leur application compagnon exécutable sur un équipement utilisateur (par ex. smartphone ou tablette) pour leur interface utilisateur. En particulier, les passerelles multimédia de type déporté n'affichent aucun menu utilisateur lorsqu'elles sont connectées à un téléviseur, et n'affiche qu'un écran d'attente demandant à l'utilisateur de lancer une application compagnon sur un équipement utilisateur.

L'interface utilisateur fournie par l'application compagnon, permet typiquement d'afficher sur un écran de l'équipement utilisateur la liste des contenus multimédia disponibles, d'en sélectionner un, et d'en contrôler la lecture (pause, avance rapide, retour rapide, etc.). Elle présente cependant un problème d'ergonomie, car pour commander la passerelle l'utilisateur doit passer par l'application compagnon de la passerelle, et donc réveiller l'équipement utilisateur, le débloquer en entrant ses informations d'authentification, lancer l'application et enfin effectuer sa commande.

Ces opérations sont longues et fastidieuses. Elles représentent donc un frein à l'usage des passerelles multimédia pour lesquelles l'interface utilisateur repose sur une application compagnon exécutée sur un équipement utilisateur.

Des techniques de commande d'une passerelle multimédia depuis une télécommande de téléviseur ont été envisagées, mais elles se heurtent au manque de fiabilité de l'interface HDMI-CEC (de l'anglais « *Consumer Electronics Control* »), les implémentations de la spécification HDMI-CEC variant sensiblement d'un constructeur à l'autre. Dès lors, il est inopérant pour un utilisateur d'utiliser la télécommande de son téléviseur pour piloter une passerelle multimédia connectée au téléviseur.

Il existe ainsi un besoin pour un procédé de commande de passerelle multimédia amélioré ne présentant pas les inconvénients exposés ci-dessus.

Il existe en outre un besoin pour un procédé amélioré de commande de restitution d'un contenu multimédia par une passerelle multimédia.

Un objet de la présente invention est de proposer un procédé de commande de passerelle multimédia amélioré.

Un autre objet de la présente invention est de proposer un procédé amélioré de commande de restitution d'un contenu multimédia par une passerelle multimédia.

Selon un premier aspect, il est proposé un procédé de commande de restitution d'un contenu multimédia dans un ensemble de contenus, le procédé comprenant, dans une passerelle multimédia configurée pour délivrer à un dispositif de restitution un flux de données transportant le contenu multimédia, et pour être contrôlée à partir d'une application de commande de la passerelle multimédia exécutée sur un équipement utilisateur : recevoir, depuis l'équipement utilisateur, des données décrivant des contenus de l'ensemble de contenus ; recevoir, depuis l'équipement utilisateur, des premières données d'authentification d'un utilisateur de l'équipement utilisateur ; recevoir, depuis un équipement de télécommande de la passerelle multimédia, des données relatives à une commande de changement de contenu sélectionnée sur l'équipement de télécommande de la passerelle multimédia ; déterminer, sur la base des données décrivant les contenus de l'ensemble de contenus et des données relatives à la commande de changement de contenu, des données d'identification et des données d'obtention d'un contenu correspondant à la commande de changement de contenu ; générer, sur la base des données d'identification et d'obtention, une requête de transmission d'un flux de données transportant le contenu correspondant à la commande de changement de contenu, la requête de transmission comprenant les données d'obtention et des deuxièmes données d'authentification correspondant aux premières données d'authentification ; émettre vers un serveur de contenus la requête de transmission de flux de données.

Le procédé proposé permet avantageusement d'éviter à l'utilisateur d'utiliser l'application compagnon de la passerelle multimédia pour transmettre à la passerelle des commandes de passage d'un contenu multimédia en cours de lecture à un autre contenu disponible (commandes de « *zapping* » d'un programme à l'autre). Or, le « zapping », ou changement de contenu multimédia, représente 90% des actions utilisateur sur un téléviseur. Le procédé propose simplifie donc grandement la commande utilisateur d'une passerelle multimédia et améliore fortement l'expérience utilisateur lors de l'utilisation d'une passerelle multimédia.

De plus, le procédé proposé offre une solution qui n'est pas tributaire des implémentations propriétaires des constructeurs de commandes de téléviseur, et donc des éventuels défauts de ces implémentations.

Dans un mode de réalisation particulier du procédé proposé, les données d'obtention du contenu correspondant à la commande de changement de contenu comprennent des données d'adressage (par exemple une URL) pour télécharger le flux de données transportant le contenu correspondant à la commande de changement de contenu.

En fonction du mode de réalisation du procédé proposé, les données décrivant les contenus de l'ensemble de contenus et les premières données d'authentification d'un utilisateur de l'équipement utilisateur sont reçues dans un même message transmis par l'équipement utilisateur. En variante, elles peuvent être reçues dans deux messages distincts.

Le procédé proposé peut aussi comprendre en outre, dans un ou plusieurs modes de réalisation, l'obtention des deuxièmes données d'authentification à partir des premières données d'authentification. Cela permet l'obtention de manière autonome par la passerelle multimédia des deuxièmes données d'authentification que la passerelle utilise pour générer une requête de transmission de flux authentifiée.

Dans un ou plusieurs modes de réalisation, les premières données d'authentification comprennent un identifiant et un mot de passe de l'utilisateur, et les deuxièmes données d'authentification comprennent un cookie informatique. Le procédé proposé comprend alors en outre l'obtention du cookie sur requête d'authentification adressée à un serveur d'authentification, la requête d'authentification comprenant l'identifiant et le mot de passe.

Cette configuration présente l'avantage de permettre une gestion autonome des cookies informatiques utilisés pour la génération de requêtes authentifiées au niveau de la passerelle multimédia. Cette gestion des cookies est particulièrement utile dans le cas où les cookies utilisés pour l'authentification des messages issus de la passerelle multimédia ont une durée de validité limitée dans le temps.

En variante, les premières données d'authentification comprennent un cookie informatique, et les deuxièmes données d'authentification comprennent le cookie.

Le procédé proposé peut en outre comprendre, dans un ou plusieurs modes de réalisation : recevoir des données de configuration d'une application chargée en mémoire de la passerelle multimédia et exécutable par un processeur de la passerelle multimédia, et interpréter la commande de changement de contenu reçue depuis l'équipement de télécommande de la passerelle multimédia en fonction des données de configuration.

Selon un deuxième aspect, il est proposé un dispositif passerelle multimédia configuré pour délivrer à un dispositif de restitution un flux de données transportant le contenu multimédia, et pour être contrôlé à partir d'une application de commande de la passerelle multimédia exécutée sur un équipement utilisateur, et comprenant : un contrôleur comprenant un processeur, une unité de communication, une mémoire, et une unité de commande couplés de manière opérationnelle au contrôleur, et configurés pour la mise en oeuvre d'un des procédés de commande de restitution d'un contenu multimédia dans un ensemble de contenus proposés dans les présentes.

Selon un autre aspect, il est proposé une clé passerelle multimédia déportée, comprenant une interface pour la connexion avec un dispositif de restitution, et un dispositif passerelle multimédia tel que proposé.

Un autre aspect concerne un programme d'ordinateur, chargeable dans une mémoire associée à un processeur, et comprenant des portions de code pour la mise en oeuvre d'un des procédés de commande de restitution d'un contenu multimédia dans un ensemble de contenus proposés dans les présentes lors de l'exécution dudit programme par le processeur.

Un autre aspect concerne un ensemble de données représentant, par exemple par voie de compression ou d'encodage, un programme d'ordinateur tel que proposé.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à une mémoire et à un module d'interface entrées/sorties, conduire l'ordinateur à commander la restitution de contenus multimédia dans un ensemble de contenus selon l'un des procédés de commande de restitution d'un contenu multimédia dans un ensemble de contenus proposés.

D'autres particularités et avantages de la présente invention apparaîtront dans la description ci-après d'exemples de réalisation non limitatifs, en référence aux dessins annexés, dans lesquels :
- la figure 1 est un schéma illustrant l'architecture d'un système de restitution de contenus multimédia selon un ou plusieurs modes de réalisation ;
- la figure 2 est un diagramme illustrant le procédé proposé selon un mode de réalisation ;
- la figure 3a est un schéma illustrant l'architecture d'un système de fourniture de contenus selon un ou plusieurs modes de réalisation ;
- La figure 3b est un diagramme de flux de messages illustrant le procédé proposé dans un ou plusieurs modes de réalisation.
- La figure 4 est un diagramme illustrant un dispositif passerelle multimédia selon un ou plusieurs modes de réalisation.

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la description.

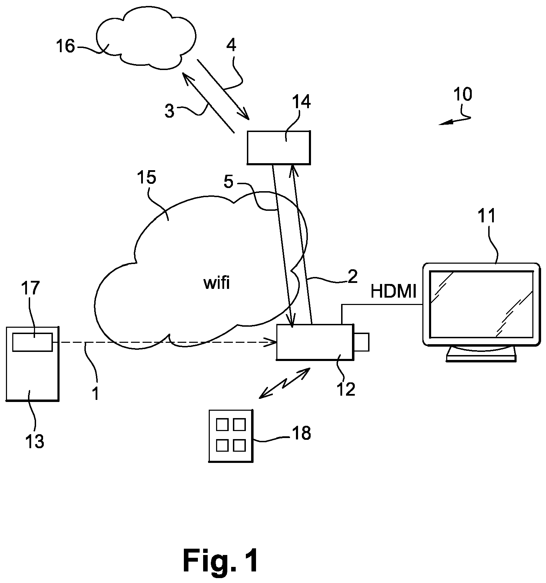

En référence à la figure 1, le système de restitution de contenus multimédia 10 comprend, dans un ou plusieurs modes de réalisation, un dispositif de restitution (par exemple un téléviseur) 11, une passerelle multimédia 12 de type clé TV connectée (par exemple via un port HDMI) au dispositif de restitution 11, un équipement utilisateur (par exemple un smartphone, ou une tablette) 13, une passerelle de service 14 et une télécommande 18 de la passerelle multimédia 12.

De préférence, la passerelle multimédia 12 est configurée pour communiquer par réseau sans-fil 15, par exemple de type Wifi, avec l'équipement utilisateur 13 sur lequel est exécutée une application configurée pour le contrôle de la passerelle multimédia 12, encore appelée application compagnon 17 (typiquement une application de restitution de contenus par la passerelle multimédia 12) configurée pour piloter les opérations de la passerelle multimédia 12 et comprenant une interface utilisateur pour les commandes utilisateur de la passerelle multimédia 12. La passerelle multimédia 12 se distingue ainsi d'un décodeur TV (ou Set-Top-Box) en ce qu'elle est configurée pour être commandée à partir de l'application compagnon 17 lorsqu'elle est exécutée sur l'équipement utilisateur 13.

La passerelle multimédia 12 peut d'autre part être configurée pour communiquer, par le biais de la passerelle de service 14 avec laquelle elle peut communiquer (par exemple par le réseau sans-fil 15), avec une plateforme vidéo 16 comprenant un ou plusieurs serveurs de contenus vidéo hébergés sur un réseau distant (par exemple le réseau Internet).

L'équipement utilisateur 13 est adapté pour la mise en oeuvre de l'application compagnon 17, et comprend typiquement un écran, par exemple tactile, pour l'affichage d'une interface utilisateur graphique (GUI, pour « *Graphical User Interface* ») de l'application compagnon 17, un microphone pour l'enregistrement de commandes vocales et d'autres interfaces d'entrée configurées en fonction du mode de réalisation de l'application compagnon 17 pour l'entrée de commandes utilisateur de l'application.

Dans un ou plusieurs modes de réalisation, l'équipement utilisateur 13 comprend une mémoire, une unité de traitement, équipée par exemple d'un processeur P, et pilotée par une application, notamment l'application compagnon dédiée à la commande de la passerelle multimédia 12, ou un programme d'ordinateur, configurés pour la mise en oeuvre d'un ou plusieurs modes de réalisation du procédé de commande proposé.

A l'initialisation, les instructions de code du programme d'ordinateur sont par exemple chargées dans une mémoire RAM avant d'être exécutées par le processeur de l'unité de traitement. Le processeur de l'unité de traitement est configuré pour mettre en oeuvre le procédé de commande selon au moins un mode de réalisation, selon les instructions du programme d'ordinateur, pour transmettre à la passerelle multimédia 12 des données décrivant des contenus d'un ensemble de contenus, et des premières données d'authentification d'un utilisateur de l'équipement utilisateur.

L'équipement utilisateur 13 peut être un téléphone portable, par exemple un smartphone, une tablette, un ordinateur, un composant électronique, ou un autre appareil comportant un module de communication, un module interface utilisateur (comprenant par exemple un écran, un microphone, un haut-parleur, un clavier) et un processeur couplé de manière opérationnelle à une mémoire, ainsi que, selon le mode de réalisation choisi, d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc. En fonction du mode de réalisation, la mémoire ou le support de stockage amovible contient des instructions qui, lorsqu'elles sont exécutées par l'unité de traitement, amènent cette unité de traitement à échanger des données avec la passerelle multimédia 12 et/ou avec la plateforme vidéo distante 16 selon au moins un mode de mise en oeuvre du procédé de commande proposé.

Dans un mode de réalisation préféré, le dispositif de restitution 11 est un téléviseur, la clé TV 12 est connectée à un port HDMI de ce téléviseur 11, et est configurée pour communiquer via un réseau WiFi 15 (par exemple un réseau WiFi résidentiel) avec son application compagnon 17 exécutée sur un dispositif électronique 13 (par exemple de type smartphone ou tablette) de l'utilisateur. La clé TV communique avec la plateforme vidéo distante 16 par l'intermédiaire de la passerelle de service 14 (par exemple une *« box* ») permettant la connexion du réseau WiFi 15 au réseau Internet par l'intermédiaire d'un réseau opéré par un opérateur de télécommunications.

Dans un ou plusieurs modes de réalisation, en mode opérationnel, l'application 17 exécutée sur l'équipement utilisateur 13 transmet à la passerelle multimédia 12 des commandes, par exemple une commande de lecture de flux 1 (telle que : « lire le flux du canal 2 »), comprenant des informations d'identification de l'utilisateur. Sur réception d'une commande de lecture de flux 1, la passerelle multimédia 12 émet vers la passerelle de service 14 une demande de flux 2 générée avec les informations reçues (contenu demandé, identification de l'utilisateur). La demande de flux est transmise 3 à la plateforme vidéo 16, qui répond 4 en retournant via la passerelle de service les éléments nécessaires à l'établissement du flux. La passerelle multimédia 12 réceptionne 5 le flux et le transmet au dispositif 11 pour restitution.

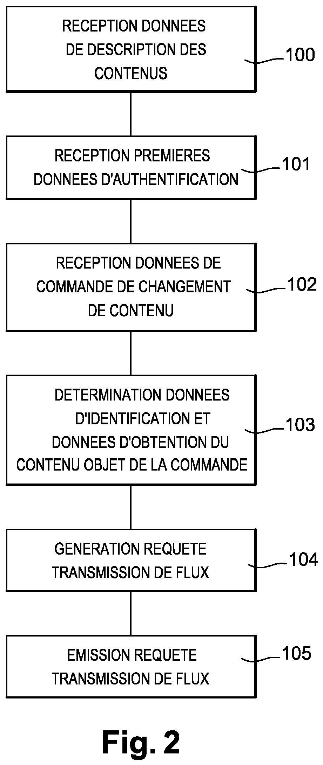

La figure 2 montre un diagramme illustrant le procédé proposé selon un mode de réalisation.

On considère un système de fourniture de contenus multimédia tel que celui illustré par la figure 1. Dans un ou plusieurs modes de réalisation, la passerelle multimédia 12 peut être configurée pour, une fois mise sous tension, télécharger depuis une application compagnon 17 exécutée sur un équipement utilisateur 13 des données de configuration d'une application exécutée sur la passerelle multimédia 12. Ce téléchargement est effectué en utilisant une connexion sans fil (on parle alors de téléchargement en mode OTA, de l'anglais « *Over The Air* »)*.* Dans un mode de réalisation particulier, l'application exécutée sur la passerelle multimédia est de type « *Webapp »,* c'est-à-dire une page Web incluant une ou plusieurs applications exécutables par un navigateur Web. Dans ce cas de figure, la passerelle multimédia peut être configurée pour exécuter un script logiciel programmé pour lancer l'exécution d'un navigateur Web (en anglais, « *web browser* »), par exemple un navigateur supportant le format de données HTML5 (de l'anglais « *HyperTextMarkup Language 5* »), et la lecture par le navigateur d'une page Web (chargée en mémoire) comprenant un ou plusieurs scripts logiciel, par exemple de type script Java (en anglais, « *Javascript* »). En variante, l'application exécutée sur la passerelle multimédia pourra être de type native, et son exécution être indépendante de l'exécution d'une application de navigation.

Les données de configuration téléchargées depuis l'équipement utilisateur peuvent définir des paramètres associés à une application (par exemple de type Webapp) exécutée sur la passerelle multimédia.

Le procédé proposé permet de commander la restitution d'un contenu multimédia dans un ensemble de contenus à partir de la télécommande d'une passerelle multimédia configurée pour délivrer à un dispositif de restitution un flux de données transportant le contenu multimédia.

En référence à la figure 2, la passerelle multimédia reçoit (100), depuis un équipement utilisateur (par exemple un smartphone, ou une tablette) exécutant une application de commande de la passerelle multimédia, des données décrivant des contenus de l'ensemble de contenus.

Dans le contexte particulier du service de fourniture de contenus de télévision, ces données décrivant des contenus peuvent être agencées pour former ou inclure un plan de service, c'est-à-dire une liste de contenus correspondant à un ensemble de chaines (ou canaux) de télévision, éventuellement comprenant pour chaque chaine des métadonnées correspondantes (décrivant le logo de la chaine, des données du Conseil Supérieur de l'Audiovisuel décrivant la chaine, des options ou bouquets relatives à la chaine, etc.).

Le plan de service peut par exemple prendre la forme d'un fichier au format de notation objet issue de Javascript JSON (de l'anglais « *JavaScript Object Notation »),* contenant une liste de chaines, chaque chaine étant décrite selon une structure de données dont un exemple est fourni en Annexe 1 des présentes.

Par exemple, pour une chaine de télévision dénommée Channel7, les données fournies dans le plan de service relative à la chaine pourront prendre la forme fournie en Annexe 2 des présentes.

Dans un mode de réalisation préféré, le plan de service téléchargé sur la passerelle multimédia à partir de l'équipement utilisateur peut être choisi spécifique à la passerelle multimédia, notamment en fonction des capacités de décodage vidéo dont la passerelle multimédia est pourvue, et inclure des descriptions d'un nombre restreint de chaines et de leurs contenus associés, en comparaison par exemple du nombre de chaines typiquement supportées par un décodeur de télévision. Par exemple, le plan de service téléchargé sur une passerelle multimédia pourra ne contenir que les descriptions de 150 chaines (et de leurs contenus associés), tandis que le plan de service utilisé par un décodeur de télévision pourra décrire au-delà de 500 chaines de télévision.

La passerelle multimédia reçoit (101) en outre depuis l'équipement utilisateur des premières données d'authentification d'un utilisateur de l'équipement utilisateur.

Dans un ou plusieurs modes de réalisation, les premières données d'authentification comprennent un cookie informatique (aussi communément appelé témoin de connexion, témoin, ou cookie), transmis par l'application compagnon de la passerelle multimédia exécutée sur l'équipement utilisateur.

Ce cookie pourra avoir été obtenu par l'application compagnon de pilotage de la passerelle multimédia exécutée sur l'équipement utilisateur, par exemple au lancement de cette application par l'utilisateur en renseignant des éléments d'identification (en anglais, *« credentials* »), par exemple un identifiant et un mot de passe, pour s'authentifier.

En variante, les premières données d'authentification pourront comprendre des éléments d'identification de l'utilisateur, à partir desquels la passerelle multimédia pourra obtenir des deuxièmes données d'authentification afin de générer une requête de transmission de flux authentifiée.

Dans un ou plusieurs modes de réalisation, l'utilisateur pourra être un abonné d'un service de fourniture de contenus multimédia, par exemple auprès d'un opérateur de télécommunications. Dans le cadre de l'abonnement à ce service, l'utilisateur pourra disposer d'un compte en ligne, et définir un ou plusieurs éléments d'identification (identifiant(s) de connexion au compte, login, mot de passe, empreinte digitale, code d'identification, etc.) pour se connecter à son compte.

Dans la mesure où des données d'authentification transitent sur un lien de communication sans fil entre l'équipement utilisateur et la passerelle multimédia, on pourra prévoir d'établir une connexion sécurisée pour l'échange de données entre l'équipement utilisateur et la passerelle multimédia. Par exemple, le lien de communication entre l'équipement utilisateur et la passerelle multimédia pourra être défini selon le protocole HTTP sécurisé (HTPPS), comme décrit ci-dessous.

Le procédé proposé permet avantageusement à un utilisateur de la passerelle multimédia de commander celle-ci avec une télécommande, sans avoir à repasser par l'interface utilisateur de l'application compagnon exécutée sur l'équipement utilisateur, et donc sans avoir à effectuer les opérations préalables et nécessaires à l'accès à cette interface utilisateur (réveil de l'équipement utilisateur, déblocage éventuel à l'aide d'un code personnel (en anglais PIN pour « *Personal Identification Number »),* etc.). La possibilité d'envoyer des commandes de changement de contenu (par exemple de type « P+ », « P- », commande de sélection de chaine, commande de sélection de canal, etc.) par le biais de la télécommande de la passerelle améliore en particulier grandement l'expérience utilisateur du fait de la forte proportion (90%) de ce type de commande parmi les commandes utilisées par les consommateurs de contenus télévisuels.

L'utilisateur peut ainsi sélectionner une commande sur la télécommande de la passerelle multimédia, ce qui conduit à l'envoi d'un code, par exemple un code de type ASCII, représentant une commande, par exemple de changement de contenu.

Selon le procédé proposé, la passerelle multimédia reçoit (102) ainsi, depuis un équipement de télécommande de la passerelle multimédia, des données relatives à une commande de changement de contenu sélectionnée sur l'équipement de télécommande de la passerelle multimédia.

Les données reçues en provenance de la télécommande de passerelle multimédia sont traitées pour être interprétées et identifier la commande sélectionnée par l'utilisateur sur la télécommande.

Par exemple, un appui-touche sur un bouton portant le label « + », respectivement « - », de la télécommande peut déclencher l'envoi d'un code ASCII prédéfini sur un lien de communication de type Bluetooth à destination de la passerelle multimédia. Les données reçues peuvent être traitées par la passerelle multimédia pour obtenir le code ASCII correspondant à l'appui-touche sur la télécommande, et le code ASCII peut être interprétée, par exemple selon une table de correspondance entre des codes de commande et des commandes respectivement correspondantes, pour obtenir la commande correspondant à l'appui-touche (commande « P+ », ou respectivement « P-», c'est-à-dire programme (ou chaine, ou canal) immédiatement supérieur dans la liste des programmes (respectivement des chaines ou des canaux), ou immédiatement inférieur dans cette liste.

Ainsi, un appui-touche sur la touche « + » ou « P+ » de la télécommande pourra être transmis par le biais de données de commande à la passerelle multimédia, puis reçue par cette passerelle et interprétée comme une commande de changement de contenu et de sélection d'un contenu immédiatement suivant dans une liste de contenus d'un ensemble de contenus le contenu actuellement sélectionné. Ce contenu pourra typiquement correspondre à un contenu en cours de restitution sur un dispositif de restitution (par exemple un téléviseur).

Les données reçues par la passerelle multimédia décrivant les contenus de l'ensemble de contenus peuvent être utilisées pour identifier un contenu correspondant à la commande de changement de contenu, et pour obtenir des données de localisation (par exemple des données d'adressage, telles qu'une URL) relatives à ce contenu.

Dans un ou plusieurs modes de réalisation, la passerelle multimédia peut ainsi déterminer (103), sur la base des données décrivant les contenus de l'ensemble de contenus et des données relatives à la commande de changement de contenu, des données d'identification et des données d'obtention d'un contenu correspondant à la commande de changement de contenu.

Dans les modes de réalisation dans lesquels les données décrivant les contenus de l'ensemble de contenus correspondent à un ou plusieurs fichiers de données décrivant une ou plusieurs liste de contenus avec, pour chaque contenu listé, un identifiant et une donnée d'adressage à partir de laquelle le contenu correspondant peut être téléchargé en mode streaming depuis un serveur hébergeant le contenu, la détermination des données d'identification et des données d'obtention du contenu correspondant à la commande de changement de contenu peut comprendre l'extraction d'une mémoire d'un identifiant de contenu en cours de sélection (par exemple un identifiant d'un contenu en cours de restitution ou un identifiant par défaut (identifiant prédéfini pour être sélectionné lors de la mise en route de la passerelle multimédia)) lorsque la commande de changement de contenu requiert un changement relativement à un contenu courant (comme c'est le cas des commandes « P+ » et « P-»). L'identifiant de contenu courant peut être utilisé pour déterminer une liste de contenus, et une position ou un rang du contenu courant dans la liste de contenus. Une position ou un rang du contenu demandé par télécommande peut être déterminée par application de la commande de changement de contenu relativement au contenu courant. Par exemple, pour une commande de type « P+ », le rang ou la position dans la liste du contenu suivant immédiatement le rang ou la position dans la liste du contenu courant sera déterminé. De manière similaire, pour une commande de type « P-», le rang ou la position dans la liste du contenu précédant immédiatement le rang ou la position dans la liste du contenu courant sera déterminé. L'identifiant du contenu demandé correspondant au rang ou à la position ainsi déterminé pourra être obtenu par lecture du fichier de données décrivant la liste de contenus.

Lorsque la commande de changement de contenu désigne explicitement un identifiant, l'identifiant du contenu demandé pourra être obtenu par lecture du fichier de données décrivant la liste de contenus pour déterminer un identifiant de la liste correspondant à l'identifiant désigné par la commande.

La détermination d'une donnée d'obtention du contenu demandé, comme par exemple une donnée de localisation du contenu demandé, c'est-à-dire du contenu identifié dans l'ensemble de contenus comme correspondant à la commande de changement de contenus, peut être effectuée en obtenant par lecture du fichier de données décrivant la liste de contenus la donnée d'adressage de contenu correspondant à l'identifiant du contenu demandé déterminé précédemment.

La passerelle multimédia peut alors générer (104), sur la base des données d'identification et d'obtention de contenu déterminées, une requête de transmission d'un flux de données transportant le contenu correspondant à la commande de changement de contenu.

Dans un ou plusieurs modes de réalisation, cette requête peut comprendre une requête de téléchargement de contenu comprenant l'identifiant de contenu demandé et des données d'obtention (par exemple des données d'adressage) de ce contenu. Les données d'obtention peuvent dans un ou plusieurs modes de réalisation prendre la forme d'une URL à partir de laquelle un flux de données transportant le contenu peut être téléchargé.

Dans un ou plusieurs modes de réalisation, la requête de transmission d'un flux de données transportant le contenu correspondant à la commande de changement de contenu comprend des deuxièmes données d'authentification de l'utilisateur. Ces données d'identification peuvent avantageusement être utilisées par le système de fourniture de contenus afin de vérifier l'authenticité de l'auteur de la requête, en l'occurrence l'utilisateur de l'équipement utilisateur duquel la passerelle multimédia a reçu des premières données d'authentification.

Dans les modes de réalisation dans lesquels les premières données d'authentification comprennent un cookie informatique, les deuxièmes données d'authentification incluses dans la requête de transmission de flux peuvent comprendre le cookie informatique, ou être générées par la passerelle multimédia à partir de ce cookie informatique.

Dans les modes de réalisation dans lesquels les premières données d'authentification comprennent des éléments d'identification (par exemple des identifiants de connexion tels qu'un login et un mot de passe), les deuxièmes données d'authentification peuvent être obtenues par la passerelle multimédia à partir de ces premières données d'authentification, et par exemple prendre la forme d'un cookie informatique. Dans ce cas de figure, la passerelle multimédia obtient par exemple un cookie informatique auprès d'un serveur d'authentification, et stocke le cookie en mémoire pour l'inclure dans la requête de transmission de flux. En variante, les deuxièmes données d'authentification peuvent comprendre des éléments d'authentification reçus de l'équipement utilisateur, les éléments d'authentification étant alors inclus dans la requête de transmission de flux pour permettre son authentification.

La requête de transmission de flux est donc une requête authentifiée en ce qu'elle contient les deuxièmes données d'authentification.

Cette requête est ensuite émise (105) vers un serveur de contenus afin d'obtenir un flux de données transportant le contenu correspondant à la commande de changement de contenu sélectionnée sur la télécommande de la passerelle multimédia.

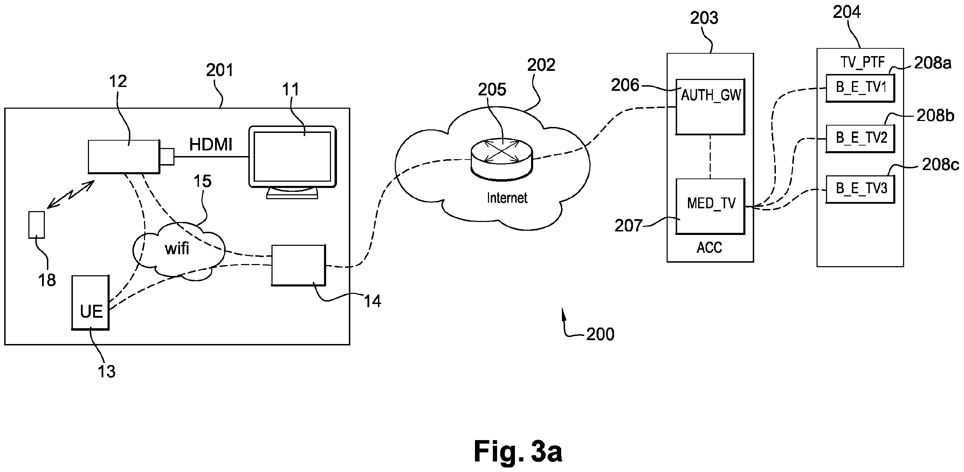

La figure 3a montre un exemple d'architecture de système de fourniture de contenus 200 selon un ou plusieurs modes de réalisation.

Le système 200 comprend un sous-système de restitution côté utilisateur 201, qui peut être similaire à celui décrit en référence à la figure 1. En reprenant les références de la figure 1, le sous-système 201 comprend une passerelle de service 14, une passerelle multimédia 12, une télécommande de passerelle multimédia 18, un équipement utilisateur 13, un dispositif de restitution 11 auquel la passerelle multimédia 12 est connectée par un lien HDMI, un réseau sans-fil 15, par exemple de type WiFi, utilisé pour les communications de données entre l'équipement utilisateur 13 et la passerelle multimédia 12, entre la passerelle multimédia 12 et la passerelle de service 14, et entre l'équipement utilisateur 13 et la passerelle de service 14. La télécommande 18 est configurée pour transmettre à la passerelle multimédia 12 des commandes sur un lien de communication sans fil, par exemple de type Bluetooth ou Bluetooth Low Energy.

La passerelle de service 14 permet de connecter le sous-système 201 à un réseau large-bande, tel que le réseau Internet 202, pour des communications des données avec une plateforme de service de télévision 204 par l'intermédiaire d'un sous-système d'accès (ACC) 203. Sur la figure 3a, on a représenté schématiquement un noeud de réseau 205 du réseau 202, par lequel transitent les données échangées entre le sous-système de restitution côté utilisateur 201 et le sous-système d'accès (ACC) 203.

Dans le mode de réalisation illustré sur la figure 3a, le sous-système d'accès (ACC) 203 peut comprendre une passerelle d'authentification (AUTH_GW) 206, et un serveur de médiation de service télévisuel (MED_TV) 207. Dans un ou plusieurs modes de réalisation, la passerelle d'authentification (AUTH_GTW) 206 est configurée pour traiter les données d'authentification incluses dans les messages issus du sous-système de restitution côté utilisateur 201. De préférence, la passerelle d'authentification (AUTH_GTW) 206 est positionnée dans le système de fourniture de contenus multimédia 200 de manière à intercepter les messages issus du sous-système de restitution côté utilisateur 201. Elle peut être intégrée à un sous-système d'authentification (non représenté sur la figure), comprenant notamment un ou plusieurs serveurs d'authentification, ou avoir accès à un tel sous-système, pour le traitement des données d'authentification.

Le sous-système d'accès (ACC) 203 est connecté à la plateforme de service de télévision (TV_PTF) 204 par l'intermédiaire du serveur de médiation de service télévisuel (MED_TV) 207. Dans le mode de réalisation illustré sur la figure 3a, la plateforme de service de télévision (TV_PTF) 204 peut comprendre un ou plusieurs serveurs de contenus télévisuels (B_E_TV1, B_E_TV2, B_E_TV3) 208a, 208b, 208c, et le serveur de médiation de service télévisuel (MED_TV) 207 dirige les flux de données en provenance de la passerelle d'authentification (AUTH_GW) 206 entre les différents serveurs de contenus télévisuels (B_E_TV1, B_E_TV2, B_E_TV3) 208a, 208b, 208c.

Sur la figure 3a, les lignes en pointillés indiquent à titre d'illustration et de manière non exhaustive les différents liens de communication de données qui peuvent exister entre les noeuds du système de fourniture de contenus 200 représentés sur la figure.

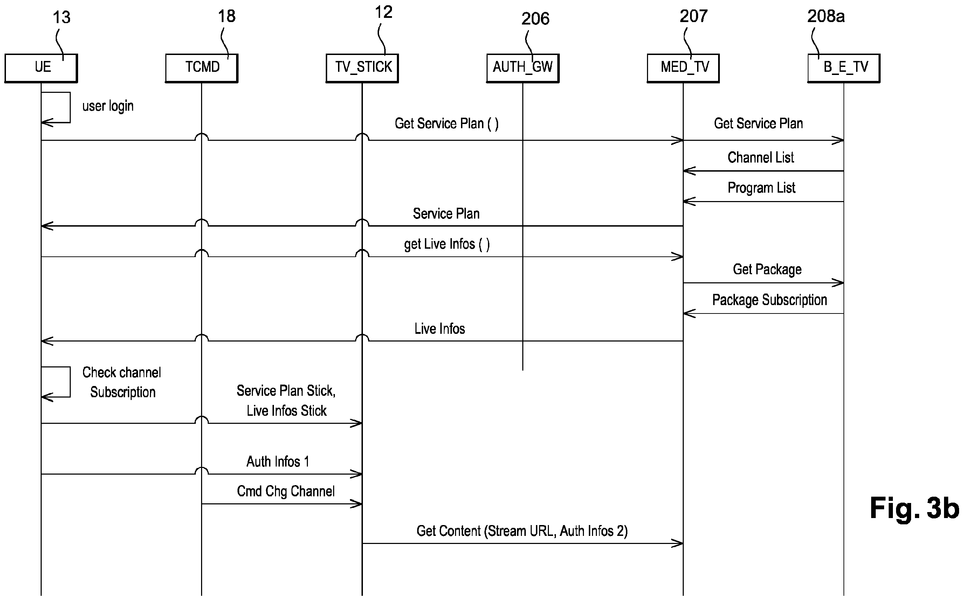

La figure 3b est un diagramme de flux de messages illustrant le procédé proposé dans un ou plusieurs modes de réalisation.

La figure 3b montre des flux d'échange de message entre un équipement utilisateur (par exemple de type smartphone) (UE) 13, une passerelle multimédia (TV_STICK) 12, une télécommande de passerelle multimédia (TCMD) 18, une passerelle d'authentification (AUTH_GTW) 206, un serveur de médiation de service de télévision (MED_TV) 207, et un serveur de contenus (B_E_TV) 208a d'une plateforme de service de télévision 204. Ces différents noeuds peuvent être compris dans un système de fourniture de contenus 200 tel que celui représenté sur la Fig. 3a.

On suppose ici que l'utilisateur de l'équipement utilisateur 13 a lancé sur cet équipement l'application de restitution de contenus compagnon de la passerelle multimédia 12, et qu'il/elle s'est pour se faire authentifié(e), par exemple entrant un login et un mot de passe. Ces données d'authentification pourront être utilisées par l'application pour générer les premières données d'authentification transmises à la passerelle de service selon le procédé proposé.

Dans un ou plusieurs modes de réalisation, les messages illustrés sur la figure 3 comme transitant par la passerelle d'authentification (AUTH_GW) 206 et issus de l'équipement utilisateur (UE) 13 ou de la passerelle multimédia (TV_STICK) 12, sont interceptés par la passerelle d'authentification (AUTH_GW) 206, qui effectue des traitements relatifs à l'authentification de ces messages.

Dans les modes de réalisation où la passerelle multimédia (TV_STICK) 12 transmet des messages à destination du serveur de médiation de service de télévision (MED_TV) 207 ou du serveur de contenus (B_E_TV) 208a comprenant des données d'authentification, par exemple sous la forme d'un cookie d'authentification, ces données d'authentification sont traitées par la passerelle d'authentification (AUTH_GW) 206. Le traitement d'authentification peut comprendre la vérification de l'existence des données d'authentification dans le message intercepté, la vérification de la validité de ces données d'authentification, et éventuellement la traduction de ces données en des données d'identification de l'utilisateur pouvant être interprétées par le serveur de médiation de service de télévision (MED_TV) 207 ou le serveur de contenus (B_E_TV) 208a, c'est-à-dire par le serveur destinataire du message. Dans ce dernier cas de figure, la passerelle d'authentification peut enrichir le message intercepté en remplaçant les données d'authentification par les données d'identification obtenues par traitement des données d'authentification.

L'homme du métier peut se rendre compte que les flux de messages illustrés sur la figure 3b pourraient varier, et que des échanges de données entre deux noeud représentés par un unique message sur la Fig. 3b peuvent être mis en oeuvre par une pluralité de messages échangés entre lesdits noeuds, ou à l'inverse, et que des échanges de données entre deux noeud représentés par une pluralité de messages sur la Fig. 3b peuvent être mis en oeuvre par une pluralité de messages échangés entre lesdits noeuds.

Dans un ou plusieurs modes de réalisation illustrés sur la figure 3b, l'application de restitution de contenus exécutée sur l'équipement utilisateur (UE) 13 peut transmettre à destination du serveur de médiation de service de télévision (MED_TV) 207 un message (primitive *getServicePlan()* sur la figure 3b) de requête d'un plan de service contenant la liste des chaines de télévision dont les contenus peuvent être obtenus par le système de fourniture de contenus (200). Cette requête est retransmise par le serveur de médiation de service de télévision (MED_TV) 207 au serveur de contenus (B_E_TV) 208a (primitive *GetServicePlan* sur la figure 3b), qui retourne en réponse au serveur de médiation de service de télévision (MED_TV) 207 (primitives *ChannelList* et *ProgramList* sur la figure 3b) un plan de service comprenant une liste de chaines, par exemple selon le format du fichier JSON décrit ci-dessus, ainsi que, dans un ou plusieurs modes de réalisation, une liste de programmes pour chaque chaine listée. Le plan de service est ensuite retransmis par le serveur de médiation de service de télévision (MED_TV) 207 à l'application de restitution de contenus exécutée sur l'équipement utilisateur (UE) 13 (primitive *ServicePlan* sur la figure 3b).

Dans un ou plusieurs modes de réalisation illustrés sur la figure 3b, l'application de restitution de contenus exécutée sur l'équipement utilisateur (UE) 13 interroge le serveur de médiation de service de télévision (MED_TV) 207 sur les droits d'accès aux contenus correspondant aux chaines et programmes listés dans le plan de service reçu par une requête (primitive *getLiveInfos()* sur la figure 3b) qui est retransmise par le serveur de médiation de service de télévision (MED_TV) 207 au serveur de contenus (B_E_TV) 208a (primitive *GetPackage* sur la figure 3b). Le serveur de contenus (B_E_TV) 208a transmet une réponse indiquant les droits d'accès de l'utilisateur (primitive *GetPackage* sur la figure 3b), réponse qui est retransmise par le serveur de médiation de service de télévision (MED_TV) 207 à l'application de restitution de contenus exécutée sur l'équipement utilisateur (UE) 13 (primitive *LiveInfos* sur la figure 3b). Sur réception des informations de droits d'accès de l'utilisateur, l'application de restitution de contenus exécutée sur l'équipement utilisateur (UE) 13 combine ces informations de droits d'accès avec celles du plan de service pour établir un plan de service intégrant les droits d'accès de l'utilisateur *(Check Channel Subscription* sur la figure 3b).

Dans un ou plusieurs modes de réalisation, l'application de restitution de contenus exécutée sur l'équipement utilisateur (UE) 13 effectue un traitement du plan de service combinant les droits d'accès afin de l'adapter à la passerelle multimédia (TV_STICK) 12, notamment aux capacités de traitement vidéo des flux reçus, et en particulier de décodage vidéo, de la passerelle multimédia (TV_STICK) 12. Elle génère ainsi un plan de service propre à la passerelle multimédia qu'elle transmet à la passerelle multimédia, sous la forme d'un plan de service seul (sans informations de droit d'accès correspondantes), ou, en variante, sous la forme d'un plan de service accompagné d'informations de droits d'accès (primitives *ServicePlanStick* et *LiveInfosStick* sur la figure 3b) ou d'un plan de service intégrant des informations de droits d'accès.

Dans un ou plusieurs modes de réalisation, l'application de restitution de contenus exécutée sur l'équipement utilisateur (UE) 13 transmet des premières données d'authentification à la passerelle multimédia (TV_STICK) 12 (primitive *Authlnfos1* sur la figure 3b).

La passerelle multimédia (TV_STICK) 12 obtient des deuxièmes données d'authentification à partir de ces premières données d'authentification reçues de l'application de restitution de contenus exécutée sur l'équipement utilisateur (UE) 13.

Dans un ou plusieurs modes de réalisation, un utilisateur sélectionne une commande de changement de contenu sur l'interface utilisateur de la télécommande de passerelle multimédia (TCMD) 18, ce qui résulte dans l'envoi par la télécommande de passerelle multimédia (TCMD) 18 de données relatives à la commande de changement de contenu (primitive *CmdChgChannel* sur la Fig. 3b).

Sur réception des données relatives à la commande de changement de contenu, la passerelle multimédia (TV_STICK) 12 effectue un traitement de ces données afin d'interpréter la commande, et, en utilisant le plan de service reçu de l'application de restitution de contenus exécutée sur l'équipement utilisateur (UE) 13, d'identifier un contenu objet de la commande de changement de contenu et de déterminer des données d'obtention de ce contenu.

La passerelle multimédia (TV_STICK) 12 génère en outre une requête de transmission de flux de données transportant le contenu objet de la commande de changement de contenu, en intégrant dans la requête les données d'obtention du contenu (par exemple, une URL d'adresse du flux à télécharger) et des deuxièmes données d'authentification obtenues sur la base des premières données d'authentification, puis émet cette requête vers le serveur de médiation de service de télévision (MED_TV) 207 (primitive *GetContent(StreamURL,Authlnfos2)* de la fig. 3b).

Comme décrit ci-dessus, les deuxièmes données d'authentification font l'objet d'un traitement par la passerelle d'authentification et, dans un ou plusieurs modes de réalisation, sont remplacées une fois la requête de transmission de flux authentifiée par des données d'identification de l'utilisateur de l'application de restitution de contenus exécutée sur l'équipement utilisateur (UE).

Le procédé proposé peut être mis en oeuvre au moyen de composants logiciels et/ou matériels. Dans cette optique, les termes "module" et « unité » peuvent correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit ci-dessous pour le module ou l'unité concerné.

Un composant logiciel correspond à un ou plusieurs programmes d'ordinateur exécutable par un processeur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (passerelle multimédia, équipement utilisateur, terminal, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré (comme un circuit intégré pour application spécifique (ASIC, de l'anglais « *Application-Specific Integrated Circuit* »), un système sur puce (SOC, de l'anglais « *System On Chip* »), une carte à puce, une carte électronique pour l'exécution d'un micrologiciel (firmware), etc.

Les SOC sont des systèmes embarqués qui intègrent tous les composants d'un système électronique dans une puce unique. Un *ASIC* est un circuit électronique spécialisé qui regroupe des fonctionnalités sur mesure pour une application donnée. Les ASIC sont généralement configurés lors de leur fabrication et ne peuvent être que simulés par l'utilisateur.

Un procédé de commande tel que proposé peut également utiliser des architectures hybrides, comme par exemple des architectures basées sur un CPU+FPGA, un GPU (de l'anglais « *Graphics Processing Unit* ») ou un MPPA (de l'anglais « *Multi-Purpose Processor Array* »)*.*

Le procédé proposé peut en outre être mis en oeuvre sous forme d'une combinaison d'éléments logiciels et matériels, comme par exemple un programme logiciel destiné à être chargé et exécuté sur un composant de type circuits logiques programmables (FPGA, de l'anglais *« Field Programmable Gate Array »*). Les *FPGA* sont des circuits électroniques reconfigurables par l'utilisateur.

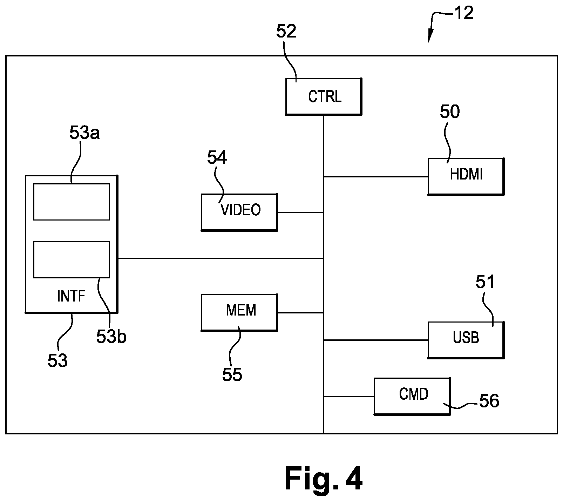

La figure 4 est un diagramme illustrant un dispositif passerelle multimédia configuré pour la mise en oeuvre d'un ou de plusieurs modes de réalisation du procédé proposé.

En référence à la figure 4, la passerelle multimédia 12 est un dispositif électronique qui comprend une unité d'interface avec un dispositif de restitution 50, une unité d'interface d'alimentation 51, un contrôleur 52, une unité de communication 53, une unité de traitement vidéo 54, une unité mémoire 55, et une unité de commande 56.

Dans l'architecture illustrée sur la figure 4, l'unité d'interface avec un dispositif de restitution 50, l'unité d'interface d'alimentation 51, l'unité de communication 53, l'unité de traitement vidéo 54, l'unité mémoire 55, et l'unité de commande 56 sont couplées de manière opérationnelle les unes avec les autres par l'intermédiaire du contrôleur 52.

L'unité mémoire 55 peut comprendre une ou plusieurs mémoires, de type mémoire morte ou ROM (pour « *Read-Only Memory* ») et de type mémoire vive RAM (pour *« Random Access Memory* »), dont une mémoire morte dans laquelle est stocké un programme d'ordinateur exécutable (firmware) par un processeur du contrôleur 52 de la passerelle multimédia 12. L'unité mémoire 55 est de préférence choisie apte à stocker un plan de service tel que décrit ci-dessus, par exemple dans une mémoire RAM. En fonction du mode de réalisation, la/les mémoires de l'unité mémoire 55 contiennent des instructions de programme d'ordinateur qui, lorsqu'elles sont exécutées par le contrôleur 52, amènent ce contrôleur 52 à effectuer ou contrôler les parties interface avec un dispositif de restitution 50, interface d'alimentation 51, communication 53, traitement vidéo 54, mémoire 55, et commande 56 des exemples de mise en oeuvre du procédé proposé décrits dans les présentes.

L'unité de communication 53 comprend une interface de communication sur un réseau local 53a, de type filaire (par exemple de type Ethernet) et/ou, de préférence, de type sans fil (par exemple de type Wifi, conforme aux normes 802.11 éditées par l'organisme de normalisation IEEE (de l'anglais « *Institute of Electrical and Electronics Engineers* »)). L'interface de communication sur un réseau local 53a peut être configurée pour connecter la passerelle multimédia 12 à un réseau local et communiquer avec d'autres noeuds du réseau local et/ou se connecter à un réseau large bande par le biais du réseau local (par exemple par l'intermédiaire d'une passerelle entre le réseau local et un réseau large bande, tel que le réseau Internet). Par exemple, en référence aux figures 1 et 3a, l'interface de communication sur un réseau local 53a peut être utilisée (en mode unidirectionnel ou bidirectionnel) pour les communications entre la passerelle multimédia 12 et la passerelle de service 14, notamment pour recevoir des données de flux multimédia en provenance de la plateforme vidéo 16 ou d'un serveur de contenus (208a, 208b, 208c) de la plateforme de service de télévision 204, et/ou les communications entre la passerelle multimédia 12 et l'application 17 exécutée sur l'équipement utilisateur 13 de la figure 1.

L'interface de communication sur un réseau local 53a est configurée pour recevoir, depuis un équipement utilisateur 13 exécutant une application de commande de la passerelle multimédia 12, des données décrivant des contenus d'un ensemble de contenus, et des premières données d'authentification d'un utilisateur de l'équipement utilisateur 13.

L'interface de communication sur un réseau local 53a sera de préférence choisie pour permettre des échanges de données sécurisés depuis et vers la passerelle multimédia 12. Par exemple, l'interface de communication sur un réseau local 53a pourra mettre en oeuvre un protocole de communication conforme à la norme HTTP sécurisé (en anglais, « *HyperText Transfer Protocol Secure* »), par exemple en utilisant une connexion sécurisée de type WebSocket (conforme à la spécification (« *Request for Comments* ») RFC6455 « The WebSocket Protocol » de l'IETF (de l'anglais « *Internet Engineering Task Force »)).*

L'interface de communication sur un réseau local 53a est de plus configurée pour émettre vers un serveur de contenus des requêtes de transmission de flux de données transportant des contenus.

L'unité de communication 53 comprend en outre une interface de communication sans fil à courte portée 53b, par exemple de type Bluetooth ou de type Communication en Champ Proche (en anglais, « *Near Field Communication* »). L'interface de communication sans fil à courte portée 53b peut être configurée pour recevoir des commandes en provenance d'une télécommande (non représentée sur la figure) de la passerelle multimédia 12, et en particulier recevoir des données relatives à des commandes de changement de contenu sélectionnées sur la télécommande de la passerelle multimédia 12.

L'unité de traitement vidéo 54 est configurée pour effectuer des traitements sur les flux multimédia reçus par la passerelle multimédia 12, comprenant un décodage vidéo de ces flux en fonction du type d'encodage utilisé pour encoder les flux reçus, et préparer les données après traitement pour les délivrer à un dispositif de restitution. Par exemple, en fonction du mode de réalisation choisi, l'unité de traitement vidéo 54 pourra être configurée pour effectuer le décodage et/ou la décompression d'une séquence vidéo encodée ou, respectivement, compressée selon un schéma du type H.264, H. 265, H. 262, MPEG-2 (de l'anglais « *Moving Picture Experet Group* », MPEG), AVC, et/ou H. 265/MPEG-4 HEVC (de l'anglais « *High Efficiency Video Coding* »). Elle pourra donc comprendre un ensemble de décodeurs (audio et/ou vidéo) aptes à décoder des contenus multimédia.

L'unité d'interface avec un dispositif de restitution 50 comprend un connecteur mâle de type HDMI, et est configurée pour s'interfacer physiquement et logiquement avec un dispositif de restitution compatible, et notamment pour recevoir les données de flux multimédia après traitement et les délivrer à un dispositif de restitution auquel la passerelle multimédia est connectée en mode opérationnel.

L'unité d'interface d'alimentation 51, qui comprend par exemple un connecteur micro-USB (de l'anglais « *Universal Serial Bus* »), est configurée pour alimenter la passerelle multimédia 12 lorsqu'elle est connectée à un port USB (par exemple un port USB d'un téléviseur) ou à une prise électrique via un adaptateur secteur adéquat.

L'unité de commande 56 est configurée pour déterminer, sur la base des données décrivant les contenus de l'ensemble de contenus et des données relatives à la commande de changement de contenu, des données d'identification et des données d'obtention d'un contenu correspondant à la commande de changement de contenu, et générer, sur la base des données d'identification et d'obtention, une requête de transmission d'un flux de données transportant le contenu correspondant à la commande de changement de contenu, la requête de transmission comprenant les données d'obtention et des deuxièmes données d'authentification correspondant aux premières données d'authentification.

Le contrôleur 52 est configuré pour piloter les unités de la passerelle multimédia 12, et en particulier l'unité de commande 56. Le contrôleur 52 peut comprendre un composant implémentant un ou plusieurs processeurs, et être piloté par une application ou un programme d'ordinateur, configurés pour la mise en oeuvre d'un ou de plusieurs modes de réalisation du procédé proposé. A l'initialisation, les instructions de code du programme d'ordinateur sont par exemple chargées dans une mémoire RAM de l'unité mémoire 55, avant d'être exécutées par un processeur du contrôleur 52.

L'unité de commande 56 peut être mise sous forme d'un logiciel qui, lorsqu'il est chargé dans une mémoire de l'unité mémoire 55 et exécuté par un processeur de la passerelle multimédia, met en oeuvre la commande de la restitution de contenus multimédia selon le procédé proposé. En outre, l'unité de commande 56 peut être mise en oeuvre sous forme logicielle, comme décrit ci-dessus, ou sous forme matérielle, comme un circuit intégré spécifique application (en anglais « *Application-Specific Integrated Circuit »,* ou ASIC), ou sous forme d'une combinaison d'éléments matériels et logiciels, comme par exemple un programme logiciel destiné à être chargé et exécuté sur un composant de type FPGA (« *Field Programmable Gate Array »).*

L'architecture de la passerelle multimédia illustrée sur la figure 4 n'est toutefois pas limitative. Par exemple, l'unité d'interface avec un dispositif de restitution 50 peut comprendre tout type d'interface audio/vidéo autre qu'une interface de type HDMI. De même, l'unité d'interface d'alimentation 51 peut comprendre tout type d'interface d'alimentation autre qu'une interface série de type USB.

En fonction du mode de réalisation choisi, certains actes, actions, événements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou événements sont effectués ou se produisent concurremment et non pas successivement.

Bien que décrits à travers un certain nombre d'exemples de réalisation détaillés, le procédé d'encodage proposé et l'équipement pour la mise en oeuvre du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en oeuvre ensemble, ou séparément, ou bien substitués les uns aux autres, et l'ensemble des différentes combinaisons et sous combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

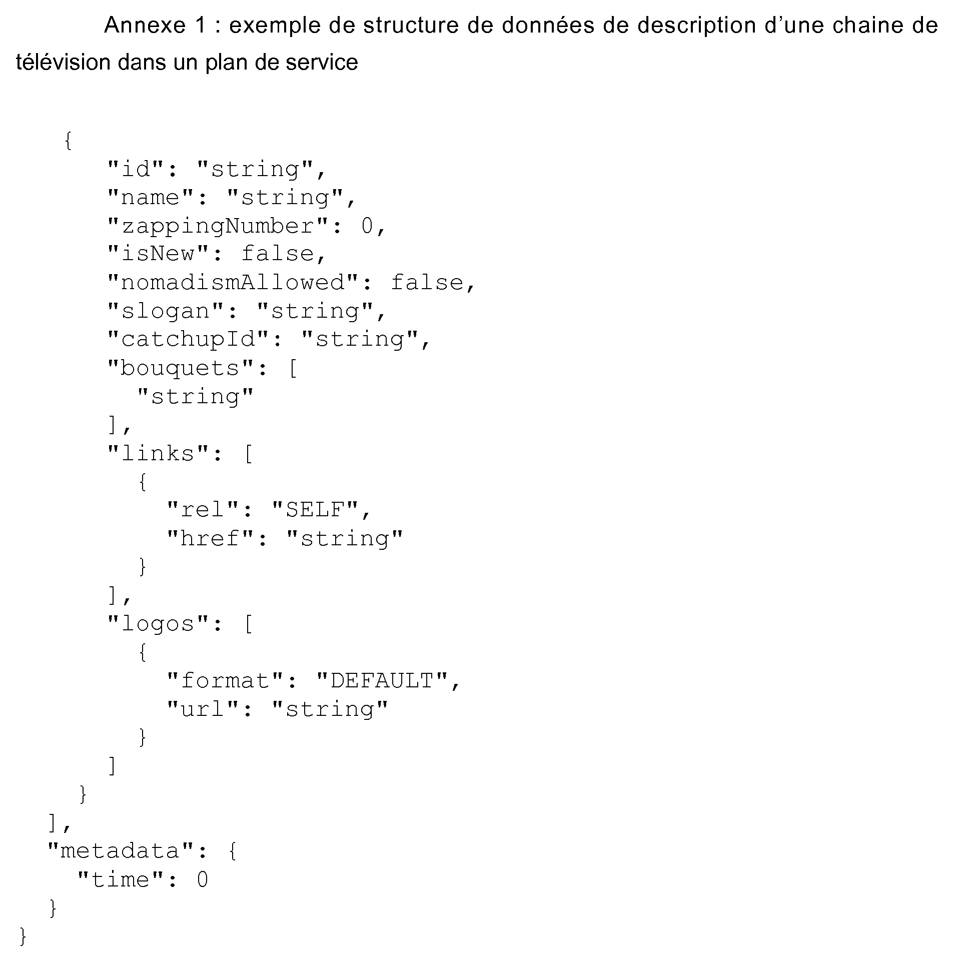

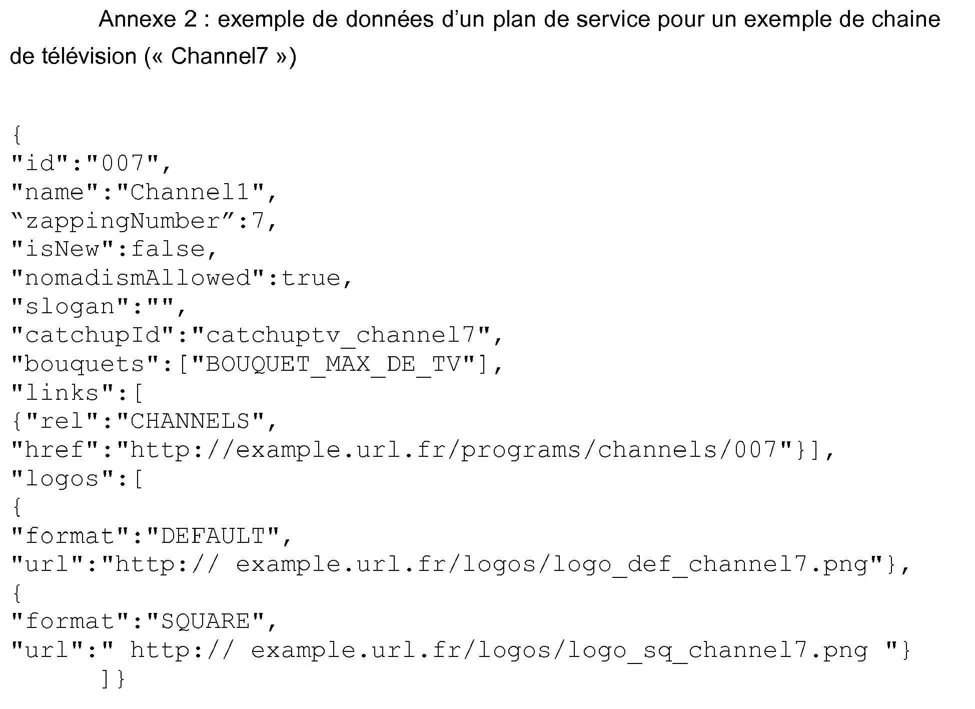

## Revendications

1. Procédé de commande de restitution d'un contenu multimédia dans un ensemble de contenus, le procédé comprenant, dans une passerelle multimédia configurée pour délivrer à un dispositif de restitution un flux de données transportant le contenu multimédia, et pour être contrôlée à partir d'une application de commande de la passerelle multimédia exécutée sur un équipement utilisateur :
recevoir, depuis l'équipement utilisateur, des données décrivant des contenus de l'ensemble de contenus ;
recevoir, depuis l'équipement utilisateur, des premières données d'authentification d'un utilisateur de l'équipement utilisateur ;
recevoir, depuis un équipement de télécommande de la passerelle multimédia, des données relatives à une commande de changement de contenu sélectionnée sur l'équipement de télécommande de la passerelle multimédia ;
déterminer, sur la base des données décrivant les contenus de l'ensemble de contenus et des données relatives à la commande de changement de contenu, des données d'identification et des données d'obtention d'un contenu correspondant à la commande de changement de contenu ;
générer, sur la base des données d'identification et d'obtention, une requête de transmission d'un flux de données transportant le contenu correspondant à la commande de changement de contenu, la requête de transmission comprenant les données d'obtention et des deuxièmes données d'authentification correspondant aux premières données d'authentification ;
émettre vers un serveur de contenus la requête de transmission de flux de données.

2. Procédé selon la revendication 1, dans lequel les données d'obtention du contenu correspondant à la commande de changement de contenu comprennent des données d'adressage pour télécharger le flux de données transportant le contenu correspondant à la commande de changement de contenu.

3. Procédé selon la revendication 1, dans lequel les données décrivant les contenus de l'ensemble de contenus et les premières données d'authentification d'un utilisateur de l'équipement utilisateur sont reçues dans un même message transmis par l'équipement utilisateur.

4. Procédé selon l'une quelconque des revendications 1 ou 2, comprenant en outre : obtenir les deuxièmes données d'authentification à partir des premières données d'authentification.

5. Procédé selon la revendication 3, dans lequel les premières données d'authentification comprennent un identifiant et un mot de passe de l'utilisateur, et les deuxièmes données d'authentification comprennent un cookie informatique, le procédé comprenant en outre : obtenir le cookie sur requête d'authentification adressée à un serveur d'authentification, la requête d'authentification comprenant l'identifiant et le mot de passe.

6. Procédé selon l'une quelconque des revendications 1 ou 2, dans lequel les premières données d'authentification comprennent un cookie informatique, et les deuxièmes données d'authentification comprennent le cookie.

7. Procédé selon l'une quelconque des revendications précédentes, comprenant en outre : recevoir des données de configuration d'une application chargée en mémoire de la passerelle multimédia et exécutable par un processeur de la passerelle multimédia, et interpréter la commande de changement de contenu reçue depuis l'équipement de télécommande de la passerelle multimédia en fonction des données de configuration.

8. Dispositif passerelle multimédia configuré pour délivrer à un dispositif de restitution un flux de données transportant le contenu multimédia, et pour être contrôlé à partir d'une application de commande de la passerelle multimédia exécutée sur un équipement utilisateur, comprenant : un contrôleur comprenant un processeur, une unité de communication, une mémoire, et une unité de commande couplés de manière opérationnelle au contrôleur, et configurés pour la mise en oeuvre d'un procédé de commande de restitution d'un contenu multimédia dans un ensemble de contenus selon l'une quelconque des revendications 1 à 7.

9. Clé passerelle multimédia, comprenant une interface pour la connexion avec un dispositif de restitution, et un dispositif passerelle multimédia selon la revendication 8.

10. Programme d'ordinateur, chargeable dans une mémoire associée à un processeur, et comprenant des portions de code pour la mise en oeuvre d'un procédé selon l'une quelconque des revendications 1 à 7 lors de l'exécution dudit programme par le processeur.

11. Ensemble de données représentant, par exemple par voie de compression ou d'encodage, un programme d'ordinateur selon la revendication 10.

12. Support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à une mémoire et à un module d'interface entrées/sorties, conduire l'ordinateur à commander la restitution de contenus multimédia dans un ensemble de contenus selon le procédé de l'une quelconque des revendications 1 à 7.
